# EUROPEAN PATENT APPLICATION

(11) **EP 2 999 070 A1**
(43) Date of publication of application: **23.03.2016**
(21) Application number: 14185318.4
(22) Date of filing: 18.09.2014
(51) Int. Cl.: H02G 3/06

(54) **Apparatus for forming a seal around an elongate object**

(71) Applicant: CMP Products Limited, Northumberland NE23 1WH (GB)
(72) Inventor: The designation of the inventor has not yet been filed
(74) Representative: Vinsome, Rex Martin

(57) **Abstract**

A cable gland (2) for forming a seal around a cable (4) is disclosed. The cable gland comprises a first body part (6) having a first aperture (8) for receiving the cable and a second body part (32) having a second aperture (33) for receiving the cable. A seal displacing member (34) is adapted to be moved relative to the first body part, as result of rotation of the first body part relative to the second body part, to displace an end (48) of a deformable sealing member (44) into engagement with the cable. A clutch member (10) is adapted to prevent, as a result of engagement of the sealing member with the cable, further movement of the seal displacing member relative to the first body part, as a result of rotation of the first body part relative to the second body part.

## Description

The present invention relates to an apparatus for forming a seal around an elongate object, and relates particularly, but not exclusively, to a cable gland for sealing a cable to an enclosure.

Cable glands are known in which a resilient seal is displaced into sealing engagement with a cable passing through the cable gland by means of rotation of a first gland body part relative to a second gland body part.

Known cable glands of this type suffer from a number of disadvantages. Firstly, frictional shear forces applied to the end of the resilient seal by the end of the gland body engaging the seal can cause the seal to become disengaged from the cable. In addition, the act of bringing the seal into engagement with the cable by means of rotation of the first gland body part relative to the second gland body part can impart torque to the seal which then acts on the first and second gland body parts, thereby giving rise to a tendency for the first gland body part to become disengaged from the second gland body part. One further disadvantage of the existing arrangement is that without disengaging the first body part from the second body part and reconnecting it, it is not possible to determine whether insufficient torque has been applied to the first body part relative to the second body part, which may give rise to failure of the cable gland to seal the external surface of the cable, or excessive torque, which may give rise to damage to the seal or cable.

Preferred embodiments of the present invention seek to overcome one or more of the above disadvantages of the prior art.

According to an aspect of the present invention, there is provided an apparatus for forming a seal around an elongate object, the apparatus comprising:-
a first body part having a first aperture for receiving the elongate object;
a second body part having a second aperture for receiving the elongate object;
seal displacing means adapted to be moved relative to said first body part, as result of rotation of said first body part relative to said second body part, to displace at least part of a deformable sealing member into engagement with the elongate object; and
clutch means adapted to prevent, as a result of engagement of the deformable sealing member with the elongate object, further movement of said seal displacing means relative to said first body part, as a result of rotation of said first body part relative to said second body part.

By providing clutch means adapted to prevent, as a result of engagement of the deformable sealing member with the elongate object, further movement of the seal displacing means relative to the first body part, as a result of rotation of the first body part relative to the second body part, this provides the advantage of avoiding the application of excessive compression to the sealing member, while also enabling an indication to be provided, such as an audible ratchet mechanism, that the seal displacing means has reached a position corresponding to adequate sealing around the elongate object, thereby applying the correct account of compression to the sealing element. In addition, by rotating the first body part relative to the second body part until the ratchet mechanism provides an audible indication, this provides the advantage that it can be determined whether the correct amount of compression has been applied to the sealing member without the necessity of dismantling the apparatus.

The clutch means may comprise at least one clutch member adapted to engage said first and second body parts to cause movement of said seal displacing means relative to said first body part as a result of rotation of said first body part relative to said second body part.

At least one said clutch member may be adapted to rotate with said first body part to cause movement of said seal displacing means relative to said first body part to a predetermined position, and to rotate relative to said first body part to prevent displacement of said seal displacing means beyond said predetermined position.

At least one said clutch member may comprise at least one deformable part adapted to engage said first body part to resist rotation of said clutch member relative to said first body part, and adapted to deform to allow rotation of said clutch member relative to said first body part when said seal displacing means reaches said predetermined position.

This provides the advantage of enabling relatively simple construction of the apparatus.

At least one said deformable part may be adapted to be prevented from deforming, thereby preventing rotation of said clutch member relative to said first body part when said seal displacing means has not reached said predetermined position, by means of engagement of said seal displacing means by said deformable part.

This provides the advantage of enabling compact construction of the apparatus by causing the seal displacing means to perform more than one function.

The apparatus may further comprise first inclined surfaces provided on one of said deformable part or said first body part, wherein said first inclined surfaces are adapted to engage protrusions on the other of said deformable part or said first body part, as a result of rotation of said first body part relative to said second body part.

This provides the advantage of enabling the maximum torque which can be transferred to be selected by adjusting the angle of inclination of the first inclined surfaces.

Said first inclined surfaces may be adapted to engage said protrusions as a result of rotation of said first body part in a first sense relative to said second body part, and the apparatus may further comprise second inclined surfaces provided on one of said deformable part or said first body part, wherein said second inclined surfaces are adapted to engage protrusions on the other of said deformable part and said first body part, as a result of rotation of said first body part in a second sense, opposite to said first sense, relative to said second body part.

This provides the advantage of enabling the angles of inclination of the first and second inclined surfaces to be selected such that greater torque is required to disengage the first body part from the second body part than is required to engage the first and second body parts to each other.

The apparatus may further comprise rotation prevention means for preventing rotation of said seal displacing means relative to said second body part.

This provides the advantage of enabling the application of torque to the sealing member to be avoided while the sealing member is being brought into contact with the elongate object, thereby reducing any tendency of the apparatus to become undone.

The rotation prevention means may comprise at least one protrusion and/or recess on said seal displacing means and at least one corresponding recess and/or protrusion on said second body part.

According to another aspect of the present invention, there is provided an apparatus for forming a seal around an elongate object, the apparatus comprising:-
a first body part having a first aperture for receiving the elongate object;
a second body part having a second aperture for receiving the elongate object;
seal displacing means adapted to be moved relative to said first body part, as a result of rotation of said first body part relative to said second body part, to displace at least part of a deformable sealing member into engagement with the elongate object; and
rotation prevention means for preventing rotation of said seal displacing means relative to said second body part.

By providing rotation prevention means for preventing rotation of the seal displacing means relative to the second body part, this provides the advantage of avoiding application of torque to the sealing member as the sealing member is brought into engagement with the elongate object. This in turn provides the advantage of reducing wear on the sealing member, reducing fatigue, and reducing the tendency of the sealing member to cause the first body part to disengage from the second body part.

The rotation prevention means may comprise at least one protrusion and/or recess on said seal displacing means and at least one corresponding recess and/or protrusion on said second body part.

The apparatus may further comprise a deformable sealing member adapted to be displaced into engagement with said elongate object by said seal displacing means.

The sealing member may be adapted to seal said first and/or said second aperture prior to insertion of the elongate object into the apparatus and to be ruptured by means of insertion of said elongate object into the apparatus.

This provides the advantage of preventing entry of dirt into the apparatus prior to use.

The sealing member may be adapted to further engage said elongate object as a result of insertion of said elongate object into said apparatus.

According to a further aspect of the present invention, there is provided an assembly for forming a seal around an elongate object, the assembly comprising a plurality of apparatus as defined above.

According to a further aspect of the present invention, there is provided an apparatus for forming a seal around an elongate object, the apparatus comprising:-
a first body part having a first aperture for receiving the elongate object;
a second body part having a second aperture for receiving the elongate object;
seal displacing means; and
a deformable sealing member, wherein said seal displacing means is adapted to be moved relative to said first body part, as a result of rotation of said first body part relative to said second body part, to displace at least part of said deformable sealing member into engagement with the elongate member, and said sealing member is adapted to seal said first and/or said second aperture prior to insertion of the elongate object into said aperture, and to be ruptured by means of insertion of said elongate object into said aperture.

This provides the advantage of preventing entry of dirt into the apparatus prior to use.

Preferred embodiments of the present invention will now be described, by way of example only and not in any limitative sense, with reference to the accompanying drawings in which:-
Figure 1 is a partially cut away perspective view of a cable gland of a first embodiment of the present invention mounted to a cable;
Figure 2 is an exploded perspective view of the cable gland of Figure 1;
Figure 3 is a schematic side cross-sectional view of part of the cable gland of Figure 1 prior to sealing engagement with the cable;
Figure 4 is a schematic cross-sectional view, corresponding to Figure 3, of the part of the cable gland after engagement with the cable;
Figure 5 is a perspective view of a clutch member of the cable gland of Figure 1;
Figure 6 is a partially cut away perspective view of a first gland body part of the cable gland of Figure 1;
Figure 7 is a schematic side cross-sectional view of part of a cable gland of a second embodiment of the present invention prior to insertion of a cable;
Figure 8 is a side cross-sectional view, corresponding to Figure 7, of the part of the cable gland after insertion of the cable;
Figure 9 is a partially cut away perspective view of a cable gland of a third embodiment of the present invention mounted to a cable; and
Figure 10 is a side cross-sectional view, corresponding to Figure 7, of part of a cable gland of a fourth embodiment of the present invention after insertion of a cable.

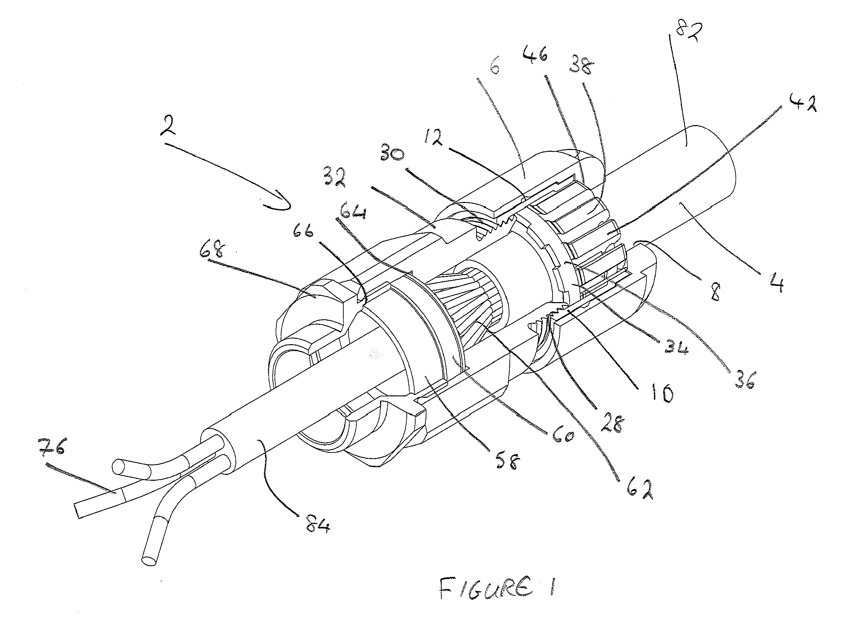

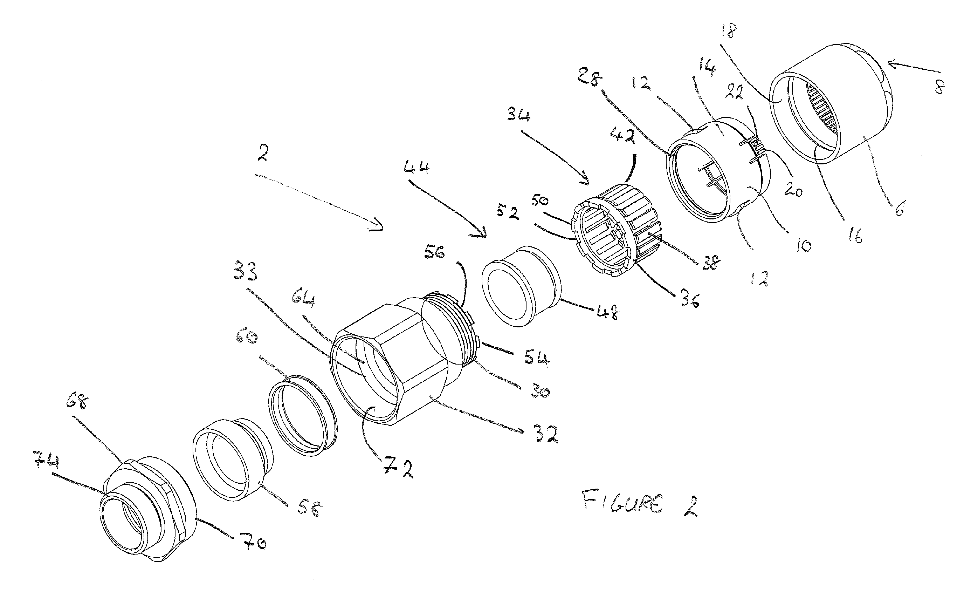

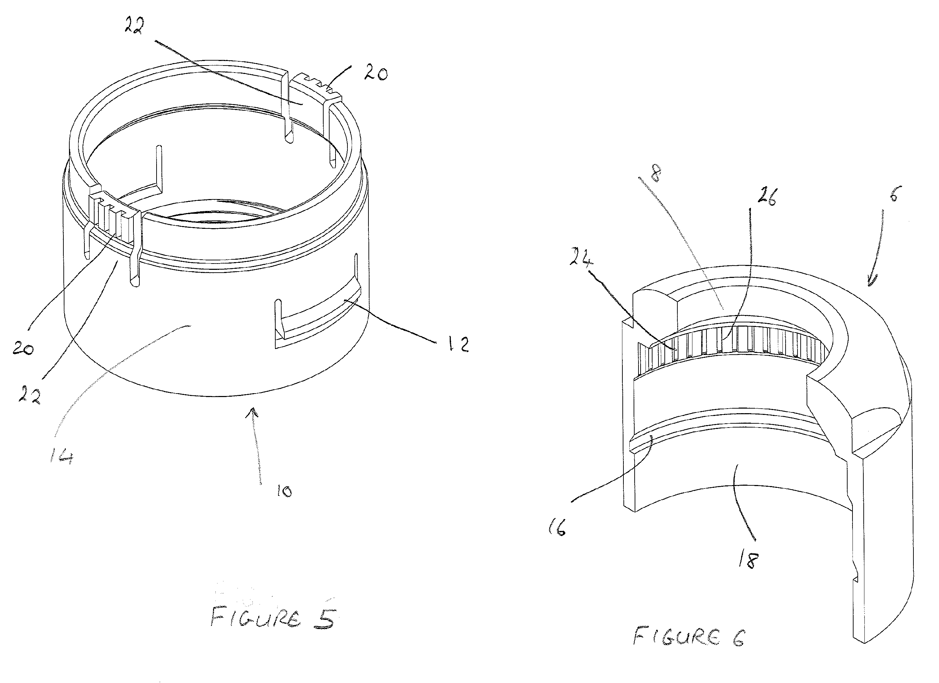

Referring to Figures 1 and 2, a cable gland 2 of a first embodiment of the present invention for sealing around a cable 4 for enabling the cable 4 to be mounted to an enclosure (not shown) has a first body part 6 having a first aperture 8 for receiving the cable 4. A clutch member 10 has resiliently displaceable protrusions 12 on an external surface 14 thereof for location in a groove 16 on an internal surface 18 of the first body part 6 to locate the clutch member 10 in the first body part 6 so that protrusions 20 on resiliently displaceable parts 22 (Figure 5) of the clutch member 10 engage first inclined surfaces 24 or second inclined surfaces 26 (Figure 6) on the internal surface 18 of the first body part 6, the purpose of which will be described in greater detail below.

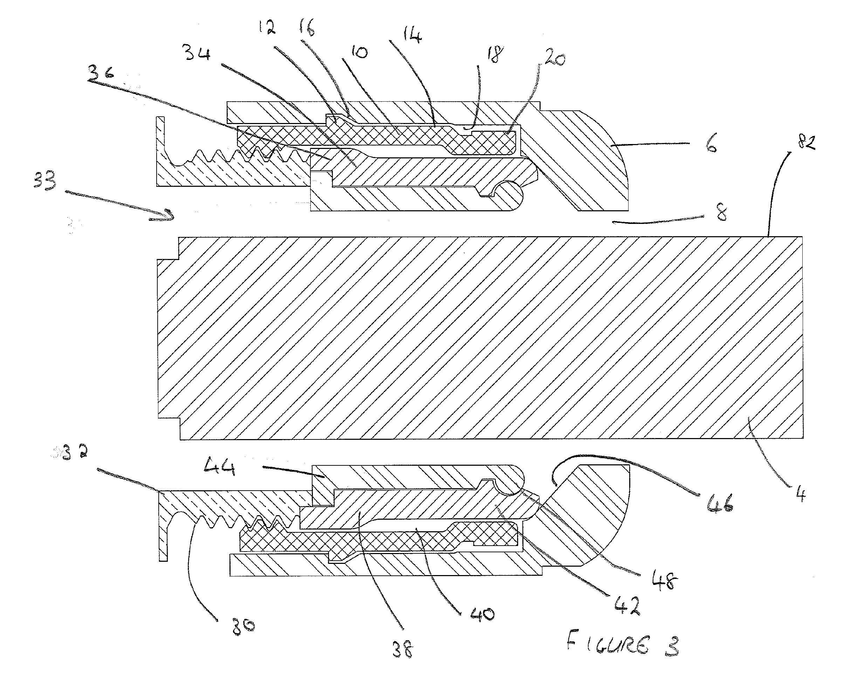

The clutch member 10 has an internal screw thread 28 at its end opposite to the protrusions 20, for engaging an external screw thread 30 at a first end of a second body part 32. The second body part 32 has a second aperture 33 for receiving the cable 4. Seal displacing means in the form of a seal displacing member 34 having a cylindrical collar member 36 having elongate fingers 38 extending therefrom is arranged such that the cylindrical collar member 36 is received in a widened part 40 (Figure 3) of the bore of the clutch member 10 so that the seal displacing member 34 can slide axially relative to the clutch member 10. Distal ends 42 of the fingers 38 surround a resiliently deformable sealing member 44 and engage a frusto-conical surface 46 on the internal surface 18 of the first body part 6 such that axial movement of the first body part 6 relative to the second body part 32, as a result of rotation of the clutch member 10 relative to the second body part 32, causes the seal displacing member 34 to be moved axially relative to the first body part 6, as a result of which the distal ends 42 of the fingers 38 are displaced radially inwards, thereby bringing end 48 of the sealing member 44 surrounded by the distal ends 42 of the fingers 38 into sealing engagement with the external surface of the cable 4.

Rotation prevention means in the form of first protrusions 50 and recesses 52 on an end surface of the seal displacing member and second protrusions 54 and recesses 56 on an end of the second body part 32, for engaging the first protrusions 50 and recesses 52, prevents rotation of the seal displacing member 34 relative to the second body part 32, as a result of which torque is not applied to the resilient sealing member 44 as the end 48 of the sealing member 44 is displaced radially inwards by the distal ends 42 of the fingers 38 towards the external surface of the cable 4.

A conical member 58 and annular member 60 clamp metal shielding members 62 of the cable 4 therebetween to form an electrical earth connection with the cable 4, and are clamped between a radial surface 64 of the second body part 32 and a radial surface 66 of a third body part 68. The third body part 68 is mounted to the second body part 32 by engagement of a first external screw thread 70 on the third body part with an internal screw thread 72 on the second body part 32. A second external screw thread 74 enables the third body part 68, and thereby the assembled cable gland 2 with the cable 4 therein, to be mounted to an enclosure (not shown).

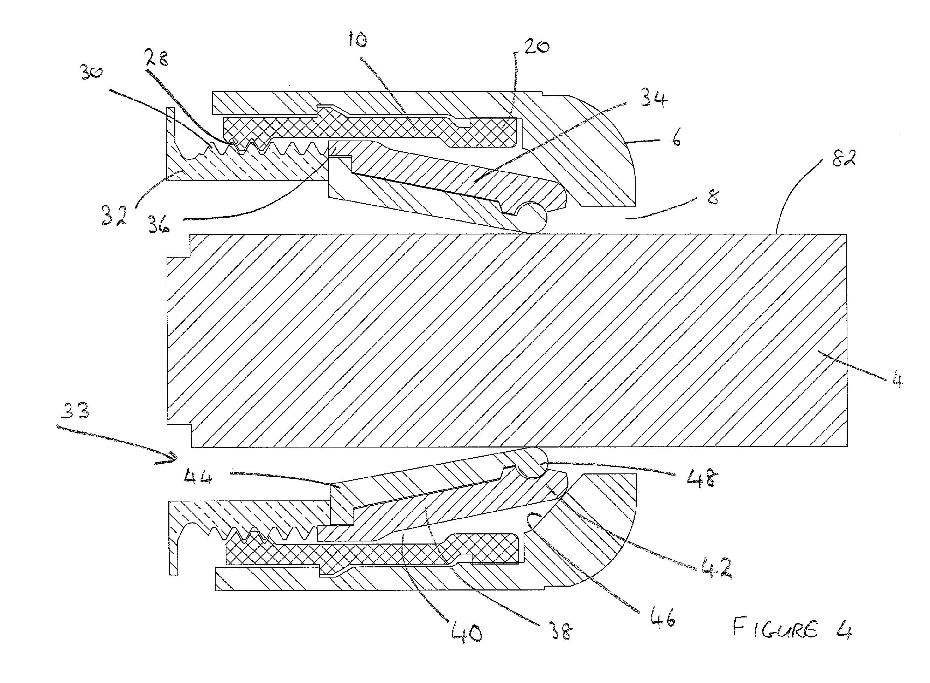

The operation of the cable gland 2 shown in Figures 1 to 6 will now be described.

Outer sheath 82 of the cable 4 is initially removed so that the individual conductors 76, inner sheath 84 and the metallic shielding members 62 of the cable 4 can be accessed, and the first body part 6 with the clutch member mounted thereto is mounted to the second body part such that the internal screw thread 28 of the clutch member 10 engages the external screw thread 30 of the second body part 32. The first body part 6 is then rotated in a first sense relative to the second body part 32. The protrusions 20 on the displaceable parts 22 of the clutch member 10 engage the first inclined surfaces 24 on the internal surface 18 of the first body part 6, and are maintained in engagement with the first inclined surfaces 24 by abutment of the displaceable parts 22 against the external surface of the fingers 38 of the seal displacing member 34. As a result, the clutch member 10 rotates with the first body part 6, and mutual engagement of the screw threads 28, 30 causes the first body part 6 to move axially relative to the second body part 32, as a result of which the fingers 38 of the seal displacing member 34 engage the frusto-conical surface 46 on the internal surface 18 of the first body part 6. This in turn causes the distal ends 42 of the fingers 38 to be displaced radially inwards, as a result of which the end 48 of the deformable sealing member 44 adjacent the distal ends 42 of the fingers 38 is displaced radially inwards into sealing contact with the external surface of the outer sheath 82 of the cable 4.

The relative dimensions and angle of inclination of the frusto-conical surface 46 on the first body part 6 are arranged such that as the deformable sealing member 44 comes into sealing engagement with the external surface of the cable 4, the distal ends 42 of the fingers 38 of the cable displacing member 34 are displaced sufficiently radially inwards that the resiliently deformable parts 22 on the clutch member 10 can be displaced radially inwards out of engagement with the first inclined surfaces 24 on the internal surface 18 of the first body member 6. As a result, the application of further torque to the first body part 6 can no longer be transferred to the clutch member 10, as a result of which further rotation of the clutch member 10 relative to the second body part 32 is no longer possible. This prevents further compression being applied to the seal 44, while at the same time sliding movement of the protrusions 20 over the first inclined surfaces 24 on the first body part 6 provides an audible indication that sufficient compression has been applied to the sealing member 44.

The second inclined surfaces 26 on the internal surface 18 of the first body part 6 have a different angle of inclination from that of the first inclined surfaces 24 such that a greater torque can be transmitted to the clutch member 10 by rotating the first body part 6 in a second sense relative to the second body part 32 such that the protrusions 20 on the radially displaceable parts 22 of the clutch member 10 engage the second inclined surfaces 26 on the internal surface 18 of the first body part 6. This enables the cable gland 2 to be arranged such that a larger torque is required to disengage the first body part 6 from the second body part 32 than is required to engage the first body part 6 to the second body part 32, thereby reducing the risk that the cable gland 2 will become loose during use.

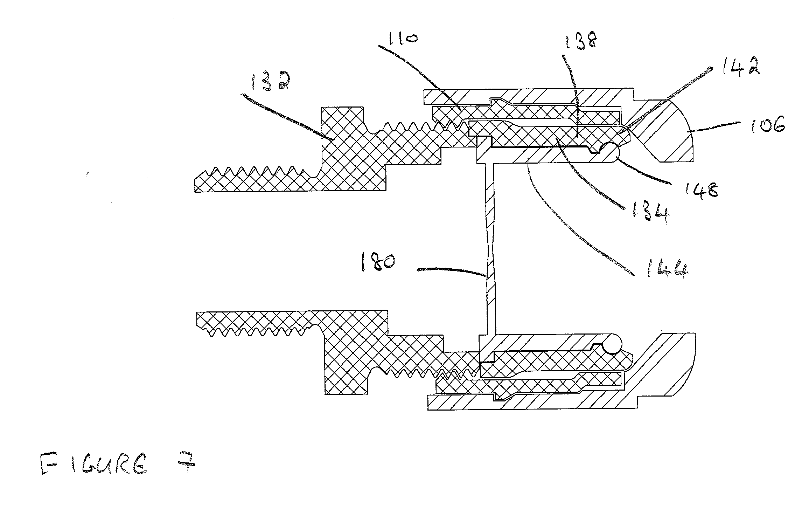

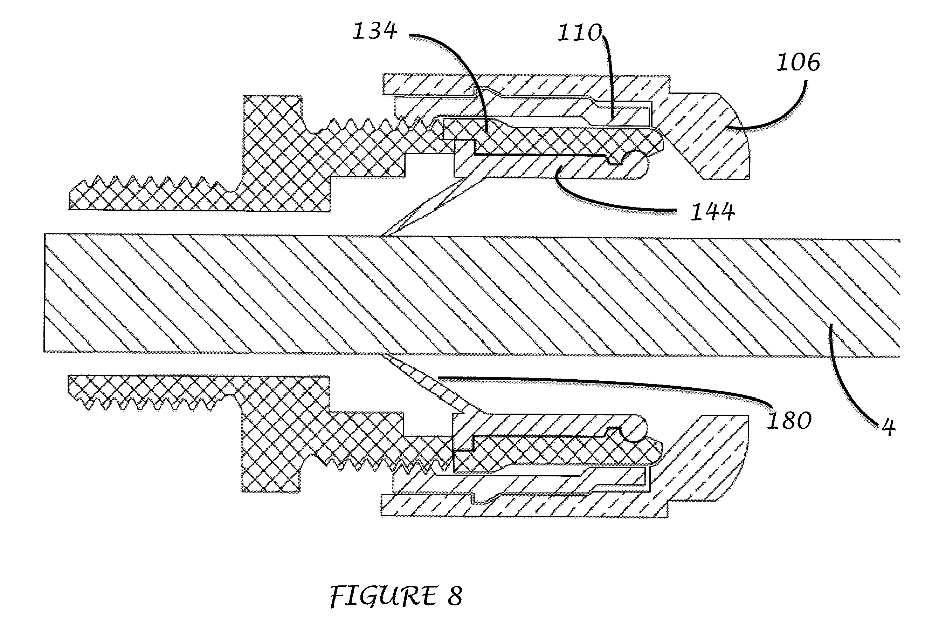

Figures 7 and 8 show part of a second embodiment of the cable gland 2, in which parts common to the embodiment of Figures 1 to 6 are denoted by like reference numerals but increased by 100. The first body part 106, second body part 132, clutch member 110 and seal displacing member 134 of the second embodiment operate in an identical manner to those of the first embodiment. However, the resilient sealing member 144 is provided with a frangible diaphragm 180 which prevents entry of dirt into the bore of the cable gland 2 until the diaphragm 180 is fractured by insertion of the cable 4, thereby forming a seal around the external surface of the cable 4 to prevent entry of further dirt. The end 148 of the resilient sealing member 144 surrounded by the distal ends 142 of the fingers 138 of the seal displacing member 134 is then brought into sealing engagement with the external surface of the cable 4 by rotation of the first body part 106 in a first sense relative to the second body part 132, in a manner identical with the operation of the embodiment of Figures 1 to 6.

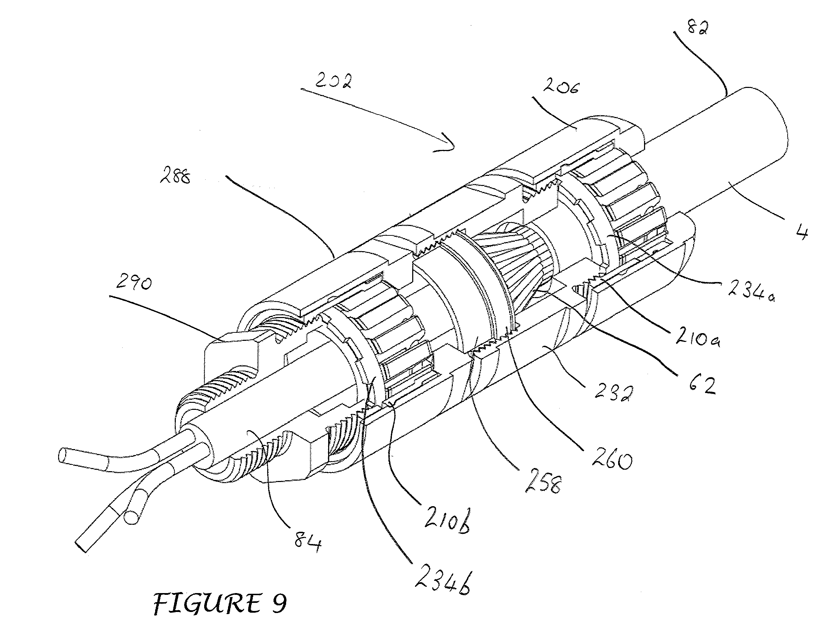

Figure 9 shows an assembly in the form of a cable gland 202 of a third embodiment of the invention, in which parts common to the embodiment of Figures 1 to 6 are denoted by like reference numerals but increased by 200. The cable gland 202 has a first body part 206, second body part 232, first clutch member 210a and first seal displacing member 234a, which function in an identical manner to the corresponding parts 6, 32, 10 and 34 of the cable gland 2 of the embodiment of Figures 1 to 6 to bring a first seal (not shown) into clamping engagement with the outer sheath 82 of the cable 4 and will therefore not be described in greater detail. Similarly, conical member 258 and annular member 260 clamp the metal shielding members 62 of the cable 4 therebetween in a manner similar to the embodiment of Figures 1 to 6. However, the third body part 68 of the embodiment of Figures 1 to 6 is replaced by housing parts 288, 290 which contain a second clutch member 210b and a second seal displacing member 234b, which operate in a similar manner to the first clutch member 210a and first seal displacing member 234a, but to bring a second seal (not shown) into clamping engagement with the outer surface of the exposed inner sheath 84 of the cable 4.

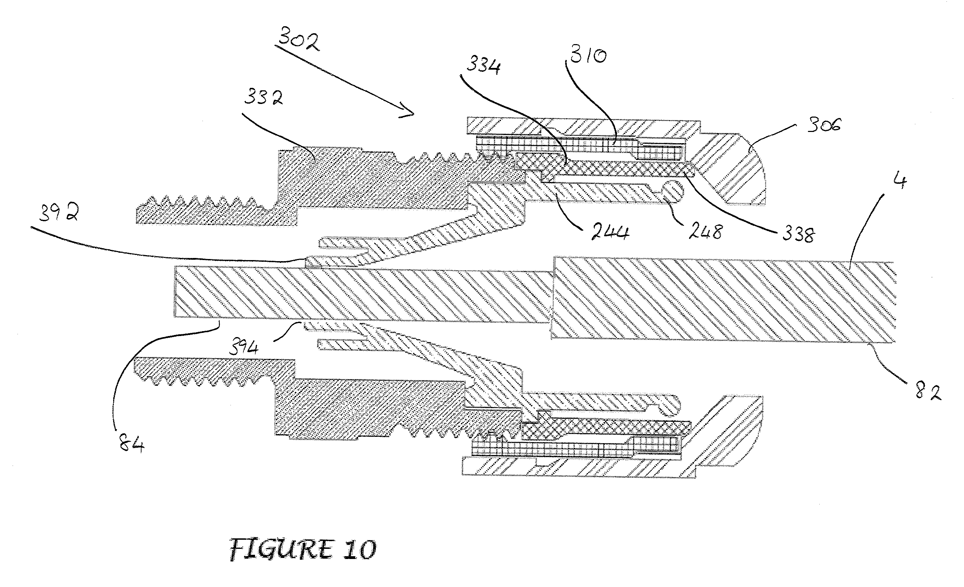

Figure 10 shows a cable gland 302 of a fourth embodiment of the present invention, in which parts common to the embodiment of Figures 1 to 6 are denoted by like reference numerals but increased by 300. The cable gland 302 has a first body part 306, second body part 332, clutch member 310 and seal displacing member 334, which function in an identical manner to the corresponding parts 6, 32, 10 and 34 of the cable gland 2 of the embodiment of Figures 1 to 6 to cause fingers 338 of seal displacing member 334 to bring end 348 of deformable sealing member 244 into clamping engagement with the outer sheath 82 of the cable 4. However, the sealing member 244 has a second end 392 having an aperture 394 for receiving the exposed inner sheath 84 of the cable 4, the second end 392 being sufficiently robustly constructed to form a seal with the inner sheath 84 of cable 4.

It will be appreciated by persons skilled in the art that the above embodiments have been described by way of example only, and not in any limitative sense, and that various alterations and modifications are possible without departure from the scope of the invention as defined by the appended claims.

## Claims

1. An apparatus for forming a seal around an elongate object, the apparatus comprising:-
a first body part having a first aperture for receiving the elongate object;
a second body part having a second aperture for receiving the elongate object;
seal displacing means adapted to be moved relative to said first body part, as result of rotation of said first body part relative to said second body part, to displace at least part of a deformable sealing member into engagement with the elongate object; and
clutch means adapted to prevent, as a result of engagement of the deformable sealing member with the elongate object, further movement of said seal displacing means relative to said first body part, as a result of further rotation of said first body part relative to said second body part.

2. An apparatus according to claim 1, wherein the clutch means comprises at least one clutch member adapted to engage said first and second body parts to cause movement of said seal displacing means relative to said first body part as a result of rotation of said first body part relative to said second body part.

3. An apparatus according to claim 2, wherein at least one said clutch member is adapted to rotate with said first body part to cause movement of said seal displacing means relative to said first body part to a predetermined position, and to rotate relative to said first body part to prevent displacement of said seal displacing means beyond said predetermined position.

4. An apparatus according to claim 3, wherein at least one said clutch member comprises at least one deformable part adapted to engage said first body part to resist rotation of said clutch member relative to said first body part, and adapted to deform to allow rotation of said clutch member relative to said first body part when said seal displacing means reaches said predetermined position.

5. An apparatus according to claim 4, wherein at least one said deformable part is adapted to be prevented from deforming, thereby preventing rotation of said clutch member relative to said first body part when said seal displacing means has not reached said predetermined position, by means of engagement of said seal displacing means by said deformable part.

6. An apparatus according to claim 4 or 5, further comprising first inclined surfaces provided on one of said deformable part or said first body part, wherein said first inclined surfaces are adapted to engage protrusions on the other of said deformable part or said first body part, as a result of rotation of said first body part relative to said second body part.

7. An apparatus according to claim 6, wherein said first inclined surfaces are adapted to engage said protrusions as a result of rotation of said first body part in a first sense relative to said second body part, and the apparatus further comprises second inclined surfaces provided on one of said deformable part or said first body part, wherein said second inclined surfaces are adapted to engage protrusions on the other of said deformable part and said first body part, as a result of rotation of said first body part in a second sense, opposite to said first sense, relative to said second body part.

8. An apparatus according to any one of the preceding claims, further comprising rotation prevention means for preventing rotation of said seal displacing means relative to said second body part.

9. An apparatus according to claim 8, wherein the rotation prevention means comprises at least one protrusion and/or recess on said seal displacing means and at least one corresponding recess and/or protrusion on said second body part.

10. An apparatus for forming a seal around an elongate object, the apparatus comprising:-
a first body part having a first aperture for receiving the elongate object;
a second body part having a second aperture for receiving the elongate object;
seal displacing means adapted to be moved relative to said first body part, as a result of rotation of said first body part relative to said second body part, to displace at least part of a deformable sealing member into engagement with the elongate object; and
rotation prevention means for preventing rotation of said seal displacing means relative to said second body part.

11. An apparatus according to claim 10, wherein the rotation prevention means comprises at least one protrusion and/or recess on said seal displacing means and at least one corresponding recess and/or protrusion on said second body part.

12. An apparatus according to any one of the preceding claims, further comprising a deformable sealing member adapted to be displaced into engagement with said elongate object by said seal displacing means.

13. An apparatus according to claim 12, including one or more of the following features:
(i) wherein the sealing member is adapted to seal said first and/or said second aperture prior to insertion of the elongate object into said apparatus and to be ruptured by means of insertion of said elongate object into said apparatus; or
(ii) wherein the sealing member is adapted to further engage said elongate object as a result of insertion of said elongate object into said apparatus.

14. An assembly for forming a seal around an elongate object, the assembly comprising a plurality of apparatus according to any one of the preceding claims.

15. An apparatus for forming a seal around an elongate object, the apparatus comprising:-
a first body part having a first aperture for receiving the elongate object;
a second body part having a second aperture for receiving the elongate object;
seal displacing means; and
a deformable sealing member, wherein said seal displacing means is adapted to be moved relative to said first body part, as a result of rotation of said first body part relative to said second body part, to displace at least part of said deformable sealing member into engagement with the elongate member, and said sealing member is adapted to seal said first and/or said second aperture prior to insertion of the elongate object into said aperture, and to be ruptured by means of insertion of said elongate object into said aperture.
